# EUROPEAN PATENT SPECIFICATION

(11) **EP 3 343 831 B1**
(45) Date of publication and mention of the grant of the patent: **29.06.2022**
(21) Application number: 16838522.7
(22) Date of filing: 18.08.2016
(51) Int. Cl.: H04L 9/32

(54) **IDENTITY AUTHENTICATION METHOD AND APPARATUS**
IDENTITÄTSAUTHENTIFIZIERUNGSVERFAHREN UND -VORRICHTUNG
PROCÉDÉ ET APPAREIL D'AUTHENTIFICATION D'IDENTITÉ

(30) Priority: 27.08.2015 CN 201510534755
(43) Date of publication of application: 04.07.2018
(73) Proprietor: Advanced New Technologies Co., Ltd., George Town, Grand Cayman KY1-9008 (KY)
(72) Inventor: ZHONG, Haojie, Hangzhou 310099 (CN); ZHAO, Xiangyu, Hangzhou 310099 (CN); ZHANG, Shuli, Hangzhou 310099 (CN)
(74) Representative: Fish & Richardson P.C.
(86) International application number: PCT/CN2016/095855
(87) International publication number: WO 2017/032263

(56) References cited:
- CN-A- 101 101 686
- CN-A- 101 340 285
- CN-A- 102 880 960
- US-A1- 2004 059 924
- US-A1- 2006 176 146
- US-A1- 2010 287 369
- US-A1- 2015 046 707

## Description

### Technical Field

The present application relates to the field of computer technologies, and in particular, to an identity authentication method and apparatus.

### Background Art

In a conventional technology, identity of a user is generally authenticated by verifying a password (e.g., a 6-digit numeric string) input by the user, such that the user performs a service operation after the identity of the user is authenticated. However, in this case, the user usually needs to memorize the password, which may thus seriously affect the convenience of use by the user. In addition, the foregoing password is still a static password in essence, and a significant threat may be posed to the fund security of the user after the password is stolen.
US 20100287369 describes a server device that includes: a unit for encrypting information for requesting biometric authentication and identifying the request by using a public key of the biometric authentication device and transmitting the information; and a unit for authenticating the user according to the authentication information containing the result of the biometric authentication. The biometric authentication device includes: a unit for inputting biometric information; a unit for storing a template as biometric information registered in advance together with the user information; a unit for collating the biometric information inputted by the user with the template; a unit for adding a digital signature to the authentication information containing the collation result, information for identifying the request from the server device, and the template user information, by using a secret key of the local device and transmitting the authentication information to the server device. US 20150046707 describes a system and method of completing a transaction over a network. A personal electronic device (PED) receives transaction information; captures biometric information from the PED user; and uses such information to identify if the user is an authorized user of the PED. If the captured biometric information identifies an authorized user of the PED, the PED: enables a first one of a pair of cryptographic keys stored on the PED corresponding to the identified authorized user; generates a digital signature for the transaction using the enabled first key; generates an authenticated transaction request using the received transaction information; and transmits the authenticated transaction request to a transaction approval center via the network. The transaction approval center uses the authenticated transaction request to complete the transaction; and the PED receives confirmation regarding the transaction from the transaction approval center.
US 20040059924 describes a network infrastructure is provided that employs biometric private keys (BioPKI). Generally, Bio PKl is a unique combination of two software solutions that validate electronic user authentication: a state-of-the-art biometric signature system, and a digital signature for data integrity.

### Summary of the Invention

The present invention relates to an identity authentication method as claimed in claim 1 and a corresponding apparatus as claimed in claim 10. Preferred embodiments are defined in the dependent claims. For example, embodiments of the present application provide an identity authentication method and apparatus, which can improve the security and convenience of a service operation performed by a user.

In a first aspect, an identity authentication method is provided, the method including: receiving, by a terminal device, a service request, and collecting first biometric authentication information of a user according to the service request;
comparing the first biometric authentication information with preset biometric authentication information, and reading a pre-stored digital signature certificate private key when the comparison shows that the first biometric authentication information and the preset biometric authentication information are consistent;
digitally signing the service request according to the digital signature certificate private key, and generating a biometric information verification message; and
sending the biometric information verification message to a server, such that the server reads a pre-stored digital signature certificate public key corresponding to the digital signature certificate private key, and the server returns, after verifying and signing the biometric information verification message according to the digital signature certificate public key, authentication result information to the terminal device.

In a second aspect, an identity authentication apparatus is provided, the apparatus including: a collection unit, a reading unit, a generation unit, and a sending unit, where
the collection unit is configured to receive a service request and collect first biometric authentication information of a user according to the service request;
the reading unit is configured to compare the first biometric authentication information collected by the collection unit with preset biometric authentication information, and read a pre-stored digital signature certificate private key when the comparison shows that the first biometric authentication information and the preset biometric authentication information are consistent;
the generation unit is configured to digitally sign the service request according to the digital signature certificate private key read by the reading unit, and generate a biometric information verification message; and
the sending unit is configured to send the biometric information verification message generated by the generation unit to a server, such that the server reads a pre-stored digital signature certificate public key corresponding to the digital signature certificate private key, and the server returns, after verifying and signing the biometric information verification message according to the digital signature certificate public key, authentication result information to a terminal device.

According to the identity authentication method and apparatus provided in the present application, a terminal device sends, when the comparison shows that collected biometric authentication information is consistent with preset biometric authentication information, a biometric information verification message signed by using a pre-stored digital signature certificate private key to a server, and the server verifies and signs the biometric information verification message according to a pre-stored digital signature certificate public key, thereby achieving an objective of verifying identity of a user. Therefore, the security and convenience of a service operation performed by the user can be improved.

### Brief Description of the Drawings

FIG. 1 is a flowchart of an identity authentication method according to an embodiment of the present application;
FIG. 2 is a diagram of information exchange of an identity authentication method according to another embodiment of the present application; and
FIG. 3 is a schematic diagram of an identity authentication apparatus according to still another embodiment of the present application.

### Detailed Description

To make the objectives, technical solutions, and advantages of the embodiments of the present application much clearer, the technical solutions in the embodiments of the present application are clearly and completely described in the following with reference to the accompanying drawings in the embodiments of the present application. It is apparent that the embodiments described are some instead of all of the embodiments of the present application. All other embodiments obtained by those of ordinary skill in the art based on the embodiments in the present application without making creative efforts belong to the protection scope of the present application.

For ease of understanding about the embodiments of the present application, further explanations are given below with specific embodiments in combination with the accompanying drawings, but the embodiments do not pose any limitation to the embodiments of the present application.

The identity authentication method and apparatus provided in the embodiments of the present application are applied to scenarios where identity of a user performing a service operation is authenticated, for example, a scenario where identity of a user performing a payment operation by using a payment system can be authenticated.

It should be noted that, in the embodiments of the present application, authentication on identity of a user in a payment process is used as an example (for example, a service request is a payment request), and methods for authenticating identity of a user performing other service operations are similar. Details are not described in the present application.

The payment system includes a payment client and a payment server. A first security component is packed in the payment client. The first security component is also referred to as a security client, or referred to as a "payment security check service" (i.e., alipaySec module), configured to store a digital signature algorithm, a security client private key, a security server public key, and a newly generated digital signature certificate private key. The security client may directly communicate with a collection module (e.g., a fingerprint sensor) of a terminal device by using an operating system or may directly communicate with a Trusted Execution Environment (TEE) provided by a terminal device provider, for invoking the collection module to check whether the terminal device supports identification of biometric authentication information, whether biometric authentication information is recorded, and whether biometric authentication information input by a user is verified, as well as secure access to information and algorithms.

In addition, a second security component is also packed in the payment server. The second security component is also referred to as a security server, or referred to as a "biometric core" (i.e., bic system), configured to generate authentication challenge information, and configured to store the digital signature algorithm, the security client public key, the security server private key, a registration agreement for biometric authentication information is written in a poeder system (e.g., a registration agreement for fingerprints), and a newly generated digital signature certificate public key. The security server corresponds to the security client.

It should be further noted that the terminal device provided in the present application includes, but is not limited to, a mobile phone, a mobile computer, a tablet computer, a Personal Digital Assistant, (PDA), a media player, a smart television, a smart watch, smart glasses, a smart wristband, and so on. The operating system on the terminal device may be an IOS system, an Android system or another system. In addition, the terminal device of the present application is installed with a payment client, and is provided with a collection module. The collection module may be specifically a hardware device disposed in the operating system, and may be a fingerprint sensor, a camera, a microphone, or the like.

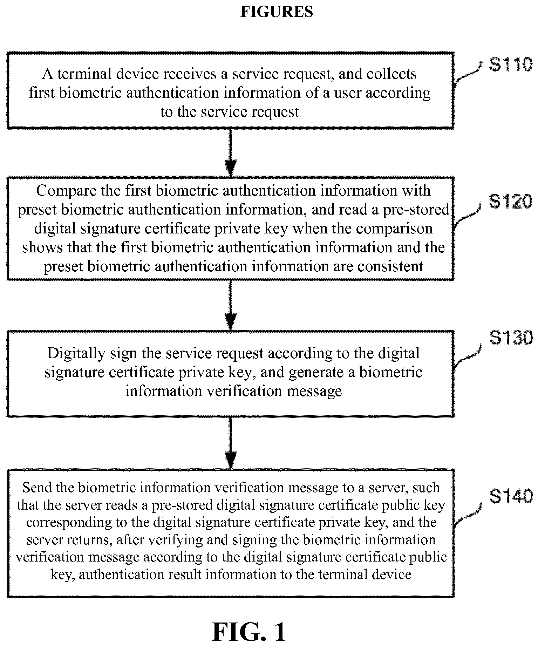

FIG. 1 is a flowchart of an identity authentication method according to an embodiment of the present application. The method may be performed by a device with processing capability: a server or a system or an apparatus. As shown in FIG. 1, the method specifically includes:
Step 110. A terminal device receives a service request, and collects first biometric authentication information of a user according to the service request.

That is, a payment client of the terminal device receives the service request, and sends a first collection instruction to a collection module by using a security client, for the collection module to collect and return the first biometric authentication information of the user to the security client.

Preferably, the service request may be a payment request. In an implementation, the payment request may be triggered by clicking a "Pay" button of the payment client by the user.

The biometric authentication information here includes one or more of the following: fingerprint information, face image information, and voice information. In this specification, description is provided by using the biometric authentication information as fingerprint information. Preset biometric authentication information may be information collected in advance by the collection module of the terminal device and capable of uniquely identifying a user. For example, when the preset biometric authentication information is preset fingerprint information, the terminal device collects fingerprint information of the user in advance by using a fingerprint sensor, and stores the collected fingerprint information locally as the preset fingerprint information. It should be noted that the preset fingerprint information here may be obtained by correspondingly calculating collected actual fingerprint information according to a preset algorithm. For example, the fingerprint sensor may collect fingerprint information of ten fingers in advance, then calculate an average of the fingerprint information of the ten fingers, and eventually obtain the preset fingerprint information.

Optionally, before step 110, the method may further include a step of generating and storing a digital signature certificate private key and a digital signature certificate public key. Through the step, the biometric authentication information of the user can only be stored locally at the terminal device instead of being uploaded to a payment server, and identity of the user can be authenticated in a payment process.

Specific steps are as follows:
Step 1101. The terminal device receives a registration request, and collects second biometric authentication information of the user according to the registration request.

In Step 1101, the receiving, by the terminal device, a registration request, and collecting second biometric authentication information of the user according to the registration request may specifically include:
Step A: The terminal device sends the registration request to the server.

That is, the payment client of the terminal device sends the registration request to the payment server, and the payment server reads, after receiving the registration request, authentication challenge information by invoking a security server. The authentication challenge information may be generated after the security server digitally signs, by using a preset security server private key, a random character string generated for the registration request.

Step B: A response message returned by the server according to the registration request is received.

Here, the payment client may receive the response message. Preferably, the response message may be authentication challenge information read by the payment server by using the security server.

Step C: The response message is verified and signed, and the second biometric authentication information of the user is collected after the verification and signature succeed.

That is, the payment client verifies and signs the received authentication challenge information by invoking the security client. Specifically, the security client verifies and signs the authentication challenge information according to a preset security server public key, and sends a second collection instruction to the collection module after the verification and signature succeed, such that the collection module collects the second biometric authentication information of the user according to the second collection instruction.

An example in which the biometric authentication information is fingerprint information is used. The payment client may first receive a registration request input by the user, and the payment client sends a first invocation message to the security client after receiving the registration request, where the first invocation message is used for instructing the security client to check whether a terminal device currently used by the user supports fingerprint payment and whether preset fingerprint information is stored in the fingerprint sensor. Here, the security client specifically checks, by invoking a service: hardwarePayExecute (type=QUICKPAY _REQUEST_TYPE_INIT) whether a terminal device currently used by the user supports fingerprint payment and whether preset fingerprint information is stored in the fingerprint sensor. If the terminal device supports fingerprint payment and preset fingerprint information is stored in the fingerprint sensor, the security client returns information indicating that fingerprint payment is supported to the payment client, for the payment client to display a slide button to the user. Upon reception of a slide instruction executed for the slide button (i.e., the user wants to register a function of fingerprint payment), the payment client displays a legal document to the user.

When the payment client receives an acknowledgement instruction input by the user, the acknowledgement instruction may be triggered when the user selects "I Understand" after viewing the displayed legal document. The payment client sends a registration request to the payment server. That is, the payment client sends the registration request to the payment server by invoking a service: getBiometricRegRequestPRC (a device id, a mobile phone device model, and a uid of a logged-in user), for the payment server to send a second invocation message to the security server. For example, the payment server sends a second invocation message by invoking a service mobileBiometricService.getRegRequest. After receiving the second invocation message, the security server generates a random character string according to information such as a current timestamp, digitally signs the random character string generated above by using a security server private key (that is, a preset security server private key) pre-stored at the security server, generates authentication challenge information, and then returns the generated authentication challenge information to the payment server. After reading the authentication challenge information, the payment server forwards the authentication challenge information to the payment client. The security client verifies and signs the authentication challenge information, to determine whether the currently received authentication challenge information is sent by the security server, and to determine whether the currently received authentication challenge information is modified. When the security client determines that the currently received authentication challenge information is sent by the security server and the sent authentication challenge information is not modified, it indicates that a data channel between the security client and the security server is secure. Thus, a second collection instruction can be sent to the fingerprint sensor (i.e., collection module), and the collection module collects second biometric authentication information of the user after receiving the second collection instruction.

Step 1102. When the comparison shows that the second biometric authentication information is consistent with the preset biometric authentication information, a digital signature certificate private key and a digital signature certificate public key corresponding to the second biometric authentication information are generated, and the digital signature certificate private key is stored.

That is, after collecting the second biometric authentication information of the user according to the collection instruction, the collection module returns the second biometric authentication information to the security client, such that the security client compares the second biometric authentication information with the preset biometric authentication information, generates, when the comparison shows that the second biometric authentication information and the preset biometric authentication information are consistent, the digital signature certificate private key and the digital signature certificate public key corresponding to the second biometric authentication information, and stores the digital signature certificate private key.

Before the security client performs the step of generating a digital signature certificate private key and a digital signature certificate public key corresponding to the second biometric authentication information, the method may further include:
receiving, by the security client, a first message sent by the payment client, the first message carrying a unique identifier (ID) of the user and an ID of the terminal device.

The step of generating a digital signature certificate private key and a digital signature certificate public key corresponding to the second biometric authentication information includes:
generating, by the security client, the digital signature certificate private key and the digital signature certificate public key corresponding to the second biometric authentication information according to an ID of the user, an ID of the terminal device, and result information of the comparison showing consistency.

Here, the ID of the user may be information generated by a payment system and used for uniquely identifying a user. In an implementation, the ID of the user may be read directly from a Session. The ID of the terminal device may be an International Mobile Equipment Identification Number (IMEI). In addition, the digital signature certificate public key and the digital signature certificate private key are generated when the comparison by the security client shows that the second biometric authentication information and the preset biometric authentication information are consistent. Therefore, the digital signature certificate private key and the digital signature certificate public key are also referred to as the digital signature certificate private key and the digital signature certificate public key corresponding to the second biometric authentication information. It should be further noted that the result information of the comparison showing consistency is result information of the comparison showing that the second biometric authentication information and the preset biometric authentication information are consistent.

After generating the digital signature certificate public key and the digital signature certificate private key, the security client stores the digital signature certificate private key. In an implementation, when an operating system of the terminal device is an Andriod system, the digital signature certificate private key may be stored in a TEE of the security client.

Certainly, in an actual application, when fingerprint payment, image recognition payment, and voice payment are registered for the first time, the terminal device may directly generate, after collecting the second biometric authentication information, the digital signature certificate public key and the digital signature certificate private key corresponding to the biometric authentication information, but does not need to compare the second biometric authentication information with the preset biometric authentication information and performing the generation step only when the comparison shows that the second biometric authentication information and the preset biometric authentication information are consistent.

Step 1103. After the registration request is digitally signed according to a first preset private key, a registration request message is generated, where the registration request message carries the digital signature certificate public key.

Here, the first preset private key may be a preset security client private key, that is, the security client generates the registration request message after digitally signing the registration request by using the preset security client private key.

It should be noted that, the registration request may include authentication challenge information at the same time, that is, the authentication challenge information and the digital signature certificate public key are digitally signed at the same time, and then the registration request message is generated.

Step 1104. The registration request message is sent to the server, such that the server stores, after verifying and signing the registration request message according to a first preset public key, the digital signature certificate public key, where the first preset private key corresponds to the first preset public key.

Here, the first preset public key may be a preset security client public key, that is, the security client sends the registration request message to the payment client, the payment client forwards the registration request message to the security server through the payment server, and the security server verifies and signs the registration request message according to the preset security client public key, and stores the digital signature certificate public key after the verification and signature succeed.

Optionally, in step 1104, the step of sending the registration request message to the server includes:
verifying, by the terminal device, whether the user is a valid user; and
checking an original payment password when the user is a valid user, and sending the registration request message to the server when the check succeeds.

In an example, the payment client may first acquire a mobile phone number bound to the current user, send a short message to a mobile phone of the mobile phone number, upon reception of a message indicating acknowledgment, receive an original payment password input by the user, and forward the registration request message to the security server by using the payment server when check of the original payment password succeeds. Thus, it can be verified whether the current user is a user of the payment client, so that the security of a payment operation can be improved.

Here, the payment client may specifically send the registration request message to the payment server by invoking a service registerBiometricPRC (a device id, a mobile phone device model, a fingerprint registration message, and a uid of a logged-in user). After the payment server forwards the registration request message to the security server, the security server verifies and signs the registration request message according to the preset security client public key, and parses and stores the digital signature certificate public key in the registration request message after the verification and signature succeed, where the preset security client private key corresponds to the preset security client public key. In addition, after the verification and signature of the registration request message succeed, a message indicating that the verification and signature succeed may also be returned to the payment server. Then, the payment server returns the message indicating that the verification and signature succeed to the payment client, such that the payment client can display to the user that identity can be authenticated in a payment process by inputting fingerprint information, face image information, voice information or the like, and the amount of payment corresponds to a security level of a different terminal device.

After the step of generating and storing the digital signature certificate private key and the digital signature certificate public key is performed, the user can authenticate, when making order payment by using a payment system, the identity by inputting fingerprint information, face image information, and voice information, and perform a payment operation after the identity authentication succeeds.

Step 120. The first biometric authentication information is compared with preset biometric authentication information, and a pre-stored digital signature certificate private key is read when the comparison shows that the first biometric authentication information and the preset biometric authentication information are consistent.

That is, the security client compares the first biometric authentication information with preset biometric authentication information, and reads a pre-stored digital signature certificate private key when the comparison shows that the first biometric authentication information and the preset biometric authentication information are consistent.

Step 130. The service request is digitally signed according to the digital signature certificate private key, and a biometric information verification message is generated.

Under a payment scenario, the service request may be a payment request, that is, the security client digitally signs the payment request according to a read digital signature certificate private key, and generates a biometric information verification message; then the security client sends the generated biometric information verification message to the payment client.

Step 140. The biometric information verification message is sent to a server, such that the server reads a pre-stored digital signature certificate public key corresponding to the digital signature certificate private key, and the server returns, after verifying and signing the biometric information verification message according to the digital signature certificate public key, authentication result information to the terminal device.

The payment client sends the biometric information verification message to the payment server, such that the payment server reads, from the security server, the pre-stored digital signature certificate public key corresponding to the digital signature certificate private key, and returns, after verifying and signing the biometric information verification message according to the digital signature certificate public key, the authentication result information to the payment client.

Certainly, in an actual application, if the payment client encrypts the sent service request, the payment server further needs to decrypt the encrypted service request according to a preset algorithm after verifying and signing the biometric information verification message according to the digital signature certificate public key, and returns result information indicating whether the authentication succeeds to the payment client only after the decryption succeeds.

Here, it should be noted that the digital signature and verification of the digital signature involved in the present application belong to the prior art, and only objects that are digitally signed and verified are different. Those skilled in the art can achieve implementation with reference to the prior art. Therefore, this process is not repeated in the present application.

According to the identity authentication method and apparatus provided in the present application, a terminal device sends, when the comparison shows that collected biometric authentication information is consistent with preset biometric authentication information, a biometric information verification message signed by using a pre-stored digital signature certificate private key to a server, and the server verifies and signs the biometric information verification message according to a pre-stored digital signature certificate public key, thereby achieving an objective of verifying identity of a user. Therefore, the security and convenience of a service operation performed by the user can be improved.

The following embodiment is described by using an example in which fingerprint payment is registered and identity of a user is authenticated by verifying fingerprint information after fingerprint payment is registered.

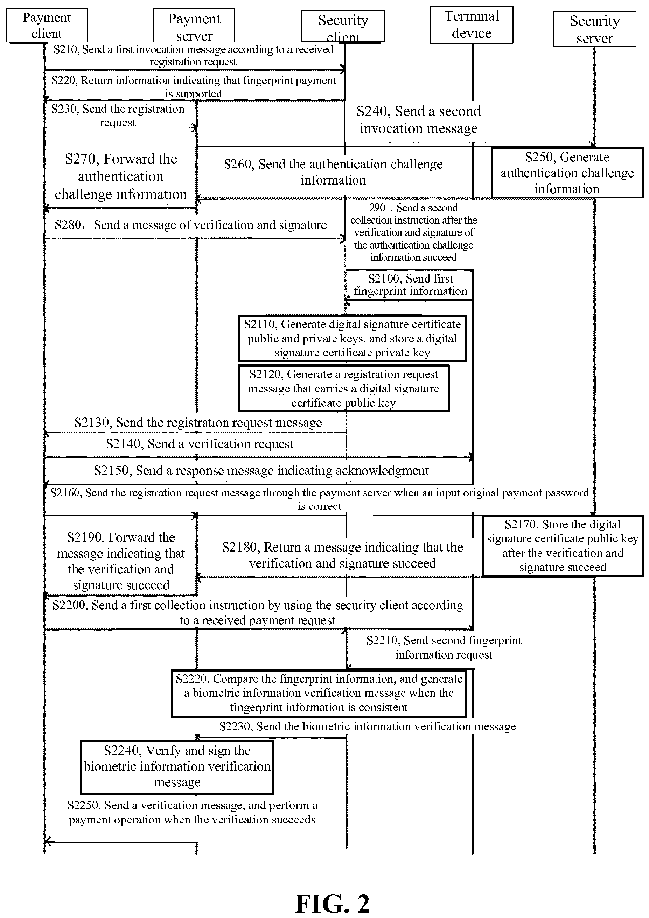

FIG. 2 is a diagram of information exchange of an identity authentication method according to another embodiment of the present application. As shown in FIG. 2, the method may specifically include:
Step 210. A payment client sends a first invocation message to a security client according to a received registration request.

The first invocation message is used for instructing the security client to check whether a terminal device currently used by a user supports fingerprint payment and whether preset fingerprint information is stored in the fingerprint sensor.

The security client specifically checks, by invoking a service: hardwarePayExecute (type=QUICKPAY _REQUEST_TYPE_INIT) whether a terminal device currently used by the user supports fingerprint payment and whether preset fingerprint information is stored in the fingerprint sensor.

Step 220. The security client returns information of support to the payment client.

Step 230. The payment client sends the registration request to a payment server.

The payment client sends the registration request to the payment server by invoking a service: getBiometricRegRequestPRC (a device id, a mobile phone device model, and a uid of a logged-in user).

Step 240. The payment server sends a second invocation message to a security server according to the received registration request.

The payment server sends the second invocation message to the security server by invoking a service mobileBiometricService.getRegRequest.

Step 250. The security server generates a random character string, and generates authentication challenge information after digitally signing the generated random character string by using a preset security server private key.

Step 260. The security server returns the generated authentication challenge information to the payment server.

Step 270. The payment server forwards the authentication challenge information to the payment client.

Step 280. The payment client sends the authentication challenge information to the security client.

The payment client may specifically send the authentication challenge information to the secu rity client by invoking a service hardwarePayExecute (type=QUICKPAY _REQUEST_TYPE_RE GISTER, data= authentication challenge information).

Step 290. The security client verifies and signs the authentication challenge information according to a preset security server public key, and sends a second collection instruction to a fingerprint sensor of a terminal device after the verification and signature succeed.

Step 2100. The fingerprint sensor of the terminal device sends first fingerprint information of the user collected in real time to the security client.

Step 2110. The security client generates, when the comparison shows that the first fingerprint information collected in real time and preset fingerprint information are consistent, a digital signature certificate private key and a digital signature certificate public key corresponding to the first fingerprint information of the user, and stores the digital signature certificate private key.

Optionally, the security client receives a first message sent by the payment client, where the first message carries a unique identifier ID of the user and an ID of the terminal device; and
the step of generating a digital signature certificate private key and a digital signature certificate public key corresponding to the first fingerprint information includes:
generating, by the security client, the digital signature certificate private key and the digital signature certificate public key corresponding to the first fingerprint information of the user according to an ID of the user, an ID of the terminal device, and result information of the comparison showing consistency.

It should be noted that the result information of the comparison showing consistency is result information of the comparison showing that the first fingerprint information collected in real time and the preset fingerprint information are consistent.

Step 2120. The security client generates a registration request message after digitally signing the authentication challenge information by using a preset security client private key, where the registration request message carries a digital signature certificate public key.

Step 2130. The security client sends the registration request message to the payment client.

Step 2140. The payment client sends a verification request to the terminal device.

Step 2150. The terminal device sends a response message indicating acknowledgment to the payment client.

Step 2160. The payment client receives an original payment password input by the user, and forwards the registration request message to the security server by using the payment server when the original payment password is correct.

Step 2170. The security server stores, after the verification and signature of the registration request message according to a preset security client public key succeed, a digital signature certificate public key stored in the registration request message.

Step 2180. The security server returns a message indicating that verification and signature succeed to the payment server.

Step 2190. The payment server forwards the message indicating that verification and signature succeed to the payment client.

Step 2200. The payment client sends a first collection instruction to the fingerprint sensor of the terminal device through the security client according to a received payment request.

The first collection instruction is used for instructing the fingerprint sensor to collect and return second fingerprint information of the user to the security client.

Step 2210. The security client receives the second fingerprint information collected by the fingerprint sensor in real time, and compares the second fingerprint information with preset fingerprint information.

Step 2220. A pre-stored digital signature certificate private key is read when the comparison shows that the second fingerprint information and the preset fingerprint information are consistent, and a biometric information verification message is generated after a payment request message is digitally signed by using the digital signature certificate private key.

Step 2230. The security client sends the biometric information verification message to the payment server by using the payment client.

Step 2240. The payment server reads a pre-stored digital signature certificate public key from the security server, and verifies and signs the biometric information verification message according to the digital signature certificate public key.

Step 2250. The payment client receives a message indicating whether the authentication succeeds returned by the payment server, and performs a payment operation after receiving a message indicating that the authentication succeeds.

In summary, according to the identity authentication method provided in the present application, when fingerprint information of a user is collected, a digital signature certificate private key stored in a security client is unlocked, and verification is performed during identity authentication by using the digital signature certificate private key instead of the fingerprint information, so that an objective of replacing an original payment password is achieved and the security and convenience of a payment operation by the user can be improved.

It should be further noted that, step 210 to step 2190 in the embodiment of the present application may also be referred to as a fingerprint payment registration procedure. The fingerprint payment registration procedure may be applied to any biometric identification and identity authentication process, for example, identity authentication at various security levels using iris, face, and a wristband.

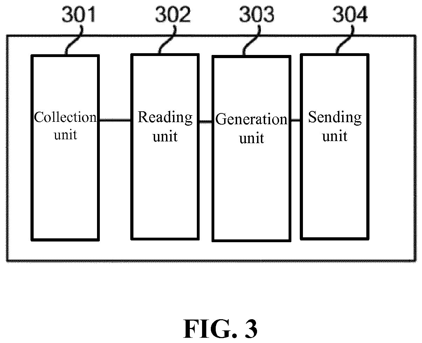

Corresponding to the identity authentication method, an embodiment of the present application further provides an identity authentication apparatus. As shown in FIG. 3, the apparatus includes: a collection unit 301, a reading unit 302, a generation unit 303, and a sending unit 304.

The collection unit 301 is configured to receive a service request and collect first biometric authentication information of a user according to the service request.

The biometric authentication information includes one or more of the following: fingerprint information, face image information, and voice information.

The reading unit 302 is configured to compare the first biometric authentication information collected by the collection unit 301 with preset biometric authentication information, and read a pre-stored digital signature certificate private key when the comparison shows that the first biometric authentication information and the preset biometric authentication information are consistent.

The generation unit 303 is configured to digitally sign the service request according to the digital signature certificate private key read by the reading unit 302, and generate a biometric information verification message.

The sending unit 304 is configured to send the biometric information verification message generated by the generation unit 303 to a server, such that the server reads a pre-stored digital signature certificate public key corresponding to the digital signature certificate private key, and the server returns, after verifying and signing the biometric information verification message according to the digital signature certificate public key, authentication result information to a terminal device.

Optionally, the collection unit 301 is further configured to receive a registration request and collect second biometric authentication information of the user according to the registration request.

The collection unit 301 is specifically configured to send the registration request to the server; receive a response message returned by the server according to the registration request; and verify and sign the response message, and collect the second biometric authentication information of the user after the verification and signature succeed.

The generation unit 303 is further configured to generate, when the comparison shows that the second biometric authentication information collected by the collection unit 301 is consistent with the preset biometric authentication information, a digital signature certificate private key and a digital signature certificate public key corresponding to the second biometric authentication information, and store the digital signature certificate private key.

The generation unit 303 is specifically configured to generate the digital signature certificate private key and the digital signature certificate public key corresponding to the second biometric authentication information according to an ID of the user, an ID of the terminal device, and result information of the comparison showing consistency.

The generation unit 303 is further configured to generate, after the registration request is digitally signed according to a first preset private key, a registration request message, where the registration request message carries the digital signature certificate public key.

The sending unit 304 is further configured to send the registration request message generated by the generation unit 303 to the server, such that the server stores, after verifying and signing the registration request message according to a first preset public key, the digital signature certificate public key, where the first preset private key corresponds to the first preset public key.

The sending unit 304 is specifically configured to verify whether the user is a valid user; and check an original payment password when the user is a valid user, and send the registration request message to the server when the check succeeds.

Optionally, the identity authentication apparatus may be applied to identity authentication during payment, and the service request is a payment request.

Functions of the functional modules in the apparatus of the embodiment of the present application can be implemented through various steps of the method embodiments. Therefore, the specific working process of the apparatus provided in the present application is not repeated herein.

According to the identity authentication apparatus provided in the present application, a collection unit 301 receives a service request, and collects first biometric authentication information of a user according to the service request; a reading unit 302 compares the first biometric authentication information with preset biometric authentication information, and reads a pre-stored digital signature certificate private key when the comparison shows that the first biometric authentication information and the preset biometric authentication information are consistent; a generation unit 303 digitally signs the service request according to the digital signature certificate private key, and generates a biometric information verification message; and a sending unit 304 sends the biometric information verification message to a server, such that the server reads a pre-stored digital signature certificate public key corresponding to the digital signature certificate private key, and the server returns, after verifying and signing the biometric information verification message according to the digital signature certificate public key, authentication result information to a terminal device. Thus, the security and convenience of a payment operation by the user can be improved.

Professionals should be further aware that, in combination with the examples described in the embodiments disclosed herein, objects and algorithm steps may be implemented by electronic hardware, computer software or a combination thereof. In order to clearly explain interchangeability between hardware and software, exemplary compositions and steps have been generally described above according to functions. Whether the functions are performed in a hardware or software manner depends on particular applications and design constraint conditions of the technical solutions. Those skilled in the art may implement the described functions by using different methods for each specific application; however, this implementation should not be considered as exceeding the scope of the present application.

Method or algorithm steps described in combination with the embodiments disclosed herein may be implemented by hardware, a processor-executed software module, or a combination thereof. The software module may be disposed in a random-access memory (RAM), a memory, a read-only memory (ROM), an erasable programmable ROM (EPROM), an electrically erasable programmable ROM (EEPROM), a register, a hard disk, a removable hard disk, a CD-ROM, or any other forms of storage media well known in the art.

The specific implementations described above further describe the objectives, technical solutions, and beneficial effects of the present application in detail. It should be appreciated that the above descriptions are merely specific implementations of the present application, but are not used to limit the protection scope of the present application. Any modification, equivalent replacement, improvement and the like made within the principle of the present application should all be included in the protection scope of the present application.

## Claims

1. An identity authentication method for authenticating of identity of a user for performing a payment operation, via a terminal device where a payment client that is packed with a security client is installed, comprising:
generating and storing a digital signature certificate private key and a digital signature certificate public key, wherein generating and storing the digital signature certificate private key and the digital signature certificate public key comprises
receiving, by the terminal device, a registration request and collecting second biometric authentication information of the user according to the registration request,
when a comparison shows that the second biometric authentication information is consistent with preset biometric authentication information collected in advance by a collection module of the terminal device and capable of uniquely identifying the user, generating, by the security client, the digital signature certificate private key and the digital signature certificate public key corresponding to the second biometric authentication information, wherein the preset biometric authentication information is collected in advance by a collection module of the terminal device and is capable of uniquely identifying the user,
storing, by the security client, the digital signature certificate private key,
generating, after the registration request is digitally signed according to a first preset private key, a registration request message, wherein the registration request message carries the digital signature certificate public key, and
sending the registration request message to a payment server such that a security server receives the registration request message through the payment server, wherein, after verifying and signing of the registration request message according to a first preset public key succeed, the security server stores the digital signature certificate public key, wherein the first preset private key corresponds to the first preset public key;
receiving (S 110), by the payment client at the terminal device, a payment request by the user to perform the payment operation;
collecting (S 110), by the collection module of the terminal device, first biometric authentication information of the user of the payment request to uniquely identify the user;
comparing (S 120), by the security client, the first biometric authentication information with the preset biometric authentication information, wherein the security client is configured to store a digital signature algorithm, a security client private key, a security server public key, and the generated and stored digital signature certificate private key generated based on a registration request from the payment client;
reading (S120), by the security client, the digital signature certificate private key when the comparison shows that the first biometric authentication information and the preset biometric authentication information are consistent;
digitally signing (S130), by the security client, the payment request according to the stored digital signature certificate private key to generate a biometric information verification message;
sending (S140), by the payment client at the terminal device, the biometric information verification message to the payment server, wherein the payment server reads the stored digital signature certificate public key corresponding to the digital signature certificate private key from the security server corresponding to the security client, wherein the security server is packed in the payment server, and wherein the security server is configured to store the digital signature algorithm, a security client public key, a security server private key, a registration agreement for biometric authentication, and the generated and stored digital signature certificate public key; and
returning (S140), by the payment server, after verifying and signing the biometric information verification message according to the generated and stored digital signature certificate public key, authentication result information to the terminal device to perform the payment operation at the payment client.

2. The method of claim 1, wherein the preset biometric authentication information is stored locally at the terminal device.

3. The method of claim 1, wherein the biometric authentication information comprises one or more of the following: fingerprint information, face image information, and voice information.

4. The method of claim 1, wherein generating the digital signature certificate private key and the digital signature certificate public key corresponding to the second biometric authentication information comprises generating the digital signature certificate private key and the digital signature certificate public key corresponding to the second biometric authentication information according to an ID of the user, an ID of the terminal device, and result information of the comparison showing consistency.

5. The method of claim 1, wherein receiving, by the terminal device, the registration request, and collecting second biometric authentication information of the user according to the registration request comprises:
sending, by the security client at the terminal device, the registration request to the security server;
receiving a response message, at the payment server, returned by the security server according to the registration request; and
verifying and signing the response message at the payment client by invoking the security client, and collecting the second biometric authentication information of the user after the verification and signature succeeds.

6. The method of claim 1, wherein sending the registration request message to the payment server comprises:
verifying, by the terminal device, whether the user is a valid user; and
checking an original payment password when the user is a valid user, and sending the registration request message to the payment server when the check succeeds.

7. The method of claim 6, wherein verifying whether the user is a valid user comprises:
obtaining a mobile phone number bound to the user;
sending a short message to a mobile phone associated with the mobile phone number; and
receiving a message indicating acknowledgement of receiving of the short message.

8. The method of any of claims 1 and 5 to 7, wherein the method is applied to identity authentication during payment.

9. The method of any preceding claim, further comprising:
encrypting the payment request;
decrypting the encrypted payment request according to a preset algorithm after verifying and signing the biometric information verification message according to the digital signature certificate public key; and
returning result information indicating whether the authentication succeeds only after the decryption succeeds.

10. An identity authentication apparatus, the apparatus comprising a processor-executable software modules stored in a memory of the apparatus, which when executed cause to perform the method of any one of claims 1 to 9.

## Patentansprüche

1. Identitätsauthentifizierungsverfahren zur Authentifizierung der Identität eines Benutzers zum Durchführen eines Zahlungsvorgangs mittels einer Endgerätevorrichtung, auf der ein Zahlungsclient installiert ist, der mit einem Sicherheitsclient integriert ist, umfassend:
Erzeugen und Speichern eines privaten Schlüssels eines digitalen Signaturzertifikats und eines öffentlichen Schlüssels eines digitalen Signaturzertifikats, wobei das Erzeugen und Speichern des privaten Schlüssels des digitalen Signaturzertifikats und des öffentlichen Schlüssels des digitalen Signaturzertifikats umfasst:
Empfangen einer Registrierungsanforderung und Erfassen von zweiten biometrischen Authentifizierungsinformationen des Benutzers gemäß der Registrierungsanforderung durch die Endgerätevorrichtung,
Erzeugen, wenn ein Vergleich zeigt, dass die zweiten biometrischen Authentifizierungsinformationen mit voreingestellten biometrischen Authentifizierungsinformationen übereinstimmen, die durch ein Erfassungsmodul der Endgerätevorrichtung im Voraus erfasst wurden und zum eindeutigen Identifizieren des Benutzers imstande sind, des privaten Schlüssels des digitalen Signaturzertifikats und des öffentlichen Schlüssels des digitalen Signaturzertifikats durch den Sicherheitsclient entsprechend den zweiten biometrischen Authentifizierungsinformationen, wobei die voreingestellten biometrischen Authentifizierungsinformationen durch ein Erfassungsmodul der Endgerätevorrichtung im Voraus erfasst werden und zum eindeutigen Identifizieren des Benutzers imstande sind,
Speichern des privaten Schlüssels des digitalen Signaturzertifikats durch den Sicherheitsclient,
Erzeugen einer Registrierungsanforderungsnachricht nach dem digitalen Signieren der Registrierungsanforderung gemäß einem ersten voreingestellten privaten Schlüssel, wobei die Registrierungsanforderungsnachricht den öffentlichen Schlüssel des digitalen Signaturzertifikats mitführt,
Senden der Registrierungsanforderungsnachricht an einen Zahlungsserver, derart dass ein Sicherheitsserver die Registrierungsanforderungsnachricht durch den Zahlungsserver empfängt, wobei der Sicherheitsserver den öffentlichen Schlüssel des digitalen Signaturzertifikats nach erfolgreichem Verifizieren und Signieren der Registrierungsanforderungsnachricht gemäß einem ersten voreingestellten öffentlichen Schlüssel speichert, wobei der erste voreingestellte private Schlüssel dem ersten voreingestellten öffentlichen Schlüssel entspricht;
Empfangen (S110) durch den Zahlungsclient an der Endgerätevorrichtung einer Zahlungsanforderung durch den Benutzer zum Durchführen des Zahlungsvorgangs;
Erfassen (S110) von ersten biometrischen Authentifizierungsinformationen des Benutzers der Zahlungsanforderung durch das Erfassungsmodul der Endgerätevorrichtung, um den Benutzer eindeutig zu identifizieren;
Vergleichen (S120) der ersten biometrischen Authentifizierungsinformationen durch den Sicherheitsclient mit den voreingestellten biometrischen Authentifizierungsinformationen, wobei der Sicherheitsclient so konfiguriert ist, dass er einen digitalen Signaturalgorithmus, einen privaten Schlüssel des Sicherheitsclients, einen öffentlichen Schlüssel des Sicherheitsservers und den erzeugten und gespeicherten privaten Schlüssel des digitalen Signaturzertifikats speichert, der basierend auf einer Registrierungsanforderung vom Zahlungsclient erzeugt wurde;
Auslesen (S120) des privaten Schlüssels des digitalen Signaturzertifikats durch den Sicherheitsclient, wenn der Vergleich zeigt, dass die ersten biometrischen Authentifizierungsinformationen und die voreingestellten biometrischen Authentifizierungsinformationen übereinstimmen;
digitales Signieren (S130) der Zahlungsanforderung gemäß dem gespeicherten privaten Schlüssel des digitalen Signaturzertifikats durch den Sicherheitsclient, um eine Nachricht zur Verifizierung der biometrischen Informationen zu erzeugen;
Senden (S140) der Nachricht zur Verifizierung der biometrischen Informationen durch den Zahlungsclient an der Endgerätevorrichtung an den Zahlungsserver, wobei der Zahlungsserver den gespeicherten öffentlichen Schlüssel des digitalen Signaturzertifikats, der dem privaten Schlüssel des digitalen Signaturzertifikats entspricht, aus dem Sicherheitsserver ausliest, der dem Sicherheitsclient entspricht, wobei der Sicherheitsserver im Zahlungsserver integriert ist, und wobei der Sicherheitsserver zum Speichern des digitalen Signaturalgorithmus, eines öffentlichen Schlüssels des Sicherheitsclients, eines privaten Schlüssels des Sicherheitsservers, einer Registrierungsvereinbarung für biometrische Authentifizierung und des erzeugten und gespeicherten öffentlichen Schlüssels des digitalen Signaturzertifikats konfiguriert ist; und
Zurücksenden (S140) von Authentifizierungsergebnisinformationen durch den Zahlungsserver an die Endgerätevorrichtung, um den Zahlungsvorgang am Zahlungsclient durchzuführen, nach dem Verifizieren und Signieren der Nachricht zur Verifizierung der biometrischen Informationen gemäß dem erzeugten und gespeicherten öffentlichen Schlüssel des digitalen Signaturzertifikats.

2. Verfahren nach Anspruch 1, wobei die voreingestellten biometrischen Authentifizierungsinformationen an der Endgerätevorrichtung lokal gespeichert werden.

3. Verfahren nach Anspruch 1, wobei die biometrischen Authentifizierungsinformationen eines oder mehrere von Folgenden umfassen: Fingerabdruckinformationen, Gesichtsbildinformationen und Sprachinformationen.

4. Verfahren nach Anspruch 1, wobei das Erzeugen des privaten Schlüssels des digitalen Signaturzertifikats und des öffentlichen Schlüssels des digitalen Signaturzertifikats entsprechend den zweiten biometrischen Authentifizierungsinformationen ein Erzeugen des privaten Schlüssels des digitalen Signaturzertifikats und des öffentlichen Schlüssels des digitalen Signaturzertifikats entsprechend den zweiten biometrischen Authentifizierungsinformationen gemäß einer ID des Benutzers, einer ID der Endgerätevorrichtung und Ergebnisinformationen des Vergleichs umfasst, die Übereinstimmung anzeigen.

5. Verfahren nach Anspruch 1, wobei das Empfangen der Registrierungsanforderung und Erfassen von zweiten biometrischen Authentifizierungsinformationen des Benutzers gemäß der Registrierungsanforderung durch die Endgerätevorrichtung umfasst:
Senden der Registrierungsanforderung durch den Sicherheitsclient an der Endgerätevorrichtung an den Sicherheitsserver;
Empfangen einer Antwortnachricht am Zahlungsserver, die vom Sicherheitsserver gemäß der Registrierungsanforderung zurückgesendet wird; und
Verifizieren und Signieren der Antwortnachricht am Zahlungsclient durch Aufrufen des Sicherheitsclients und Erfassen der zweiten biometrischen Authentifizierungsinformationen des Benutzers nach erfolgreicher Verifizierung und Signatur.

6. Verfahren nach Anspruch 1, wobei das Senden der Registrierungsanforderungsnachricht an den Zahlungsserver umfasst:
Verifizieren durch die Endgerätevorrichtung, ob der Benutzer ein gültiger Benutzer ist; und
Prüfen eines ursprünglichen Zahlungskennworts, wenn der Benutzer ein gültiger Benutzer ist, und Senden der Registrierungsanforderungsnachricht an den Zahlungsserver, wenn die Prüfung erfolgreich ist.

7. Verfahren nach Anspruch 6, wobei das Verifizieren, ob der Benutzer ein gültiger Benutzer ist, umfasst:
Erhalten einer Mobiltelefonnummer, die an den Benutzer gebunden ist;
Senden einer Kurznachricht an ein Mobiltelefon, das mit der Mobiltelefonnummer assoziiert ist; und
Empfangen einer Nachricht, die eine Bestätigung des Empfangs der Kurznachricht angibt.

8. Verfahren nach einem der Ansprüche 1 und 5 bis 7, wobei das Verfahren zur Identitätsauthentifizierung während einer Zahlung angewendet wird, und die Zahlungsanforderung eine Zahlungsanforderung ist.

9. Verfahren nach einem der vorhergehenden Ansprüche, ferner umfassend:
Verschlüsseln der Zahlungsanforderung;
Entschlüsseln der verschlüsselten Zahlungsanforderung gemäß einem voreingestellten Algorithmus nach dem Verifizieren und Signieren der Nachricht zur Verifizierung der biometrischen Informationen gemäß dem öffentlichen Schlüssel des digitalen Signaturzertifikats; und
Zurücksenden von Ergebnisinformationen, die angeben, ob die Authentifizierung erfolgreich ist, nur nach erfolgreicher Entschlüsselung.

10. Identitätsauthentifizierungsvorrichtung, wobei die Vorrichtung prozessorausführbare Softwaremodule umfasst, die in einem Speicher der Vorrichtung gespeichert sind und die bei Ausführung ein Durchführen des Verfahrens nach einem der Ansprüche 1 bis 9 bewirken.

## Revendications

1. Procédé d'authentification d'identité pour authentifier l'identité d'un utilisateur afin de réaliser une opération de paiement, par l'intermédiaire d'un dispositif terminal où un client de paiement incorporé avec un client de sécurité est installé, comprenant : la génération et le stockage d'une clé privée de certificat de signature numérique et d'une clé publique de certificat de signature numérique, la génération et le stockage de la clé privée de certificat de signature numérique et de la clé publique de certificat de signature numérique comprenant :
la réception, par le dispositif terminal, d'une demande d'enregistrement et la collecte de deuxièmes informations d'authentification biométrique de l'utilisateur conformément à la demande d'enregistrement,
lorsqu'une comparaison montre que les deuxièmes informations d'authentification biométrique sont cohérentes avec des informations d'authentification biométrique prédéfinies collectées à l'avance par un module de collecte du dispositif terminal et capables d'identifier de manière unique l'utilisateur, la génération, par le client de sécurité, de la clé privée de certificat de signature numérique et de la clé publique de certificat de signature numérique correspondant aux deuxièmes informations d'authentification biométrique, les informations d'authentification biométrique prédéfinies étant collectées à l'avance par un module de collecte du dispositif terminal et étant capables d'identifier de manière unique l'utilisateur,
le stockage, par le client de sécurité, de la clé privée de certificat de signature numérique,
la génération, une fois que la demande d'enregistrement est signée numériquement conformément à une première clé privée prédéfinie, d'un message de demande d'enregistrement, le message de demande d'enregistrement convoyant la clé publique de certificat de signature numérique, et
l'envoi du message de demande d'enregistrement à un serveur de paiement de telle sorte qu'un serveur de sécurité reçoive le message de demande d'enregistrement par l'intermédiaire du serveur de paiement, dans lequel, après avoir vérifié et signé le message de demande d'enregistrement conformément à une première clé publique prédéfinie, le serveur de sécurité stocke la clé publique de certificat de signature numérique, la première clé privée prédéfinie correspondant à la première clé publique prédéfinie,
la réception (S110), par le client de paiement au niveau du dispositif terminal, d'une demande de paiement émise par l'utilisateur pour réaliser l'opération de paiement ;
la collecte (S110), par le module de collecte du dispositif terminal, de premières informations d'authentification biométrique de l'utilisateur de la demande de paiement pour identifier de manière unique l'utilisateur ;
la comparaison (S120), par le client de sécurité, des premières informations d'authentification biométrique aux informations d'authentification biométrique prédéfinies, le client de sécurité étant configuré pour stocker un algorithme de signature numérique, une clé privée de client de sécurité, une clé publique de serveur de sécurité et la clé privée de certificat de signature numérique générée et stockée générée en fonction d'une demande d'enregistrement émise par le client de paiement,
la lecture (S120), par le client de sécurité, de la clé privée de certificat de signature numérique lorsque la comparaison montre que les premières informations d'authentification biométrique et les informations d'authentification biométrique prédéfinies sont cohérentes,
la signature numérique (S130), par le client de sécurité, de la demande de paiement conformément à la clé privée de certificat de signature numérique stockée pour générer un message de vérification d'informations biométriques ;
l'envoi (S140), par le client de paiement au niveau du dispositif terminal, du message de vérification d'informations biométriques au serveur de paiement, dans lequel le serveur de paiement lit la clé publique de certificat de signature numérique stockée correspondant à la clé privée de certificat de signature numérique du serveur de sécurité correspondant au client de sécurité, dans lequel le serveur de sécurité est incorporé au serveur de paiement, et dans lequel le serveur de sécurité est configuré pour stocker l'algorithme de signature numérique, une clé publique de client de sécurité, une clé privée de serveur de sécurité, un accord d'enregistrement pour l'authentification biométrique et la clé publique de certificat de signature numérique générée et stockée ; et
le renvoi (S140), par le serveur de paiement, après vérification et signature du message de vérification d'informations biométriques conformément à la clé publique de certificat de signature numérique générée et stockée, d'informations de résultat d'authentification au dispositif terminal pour réaliser l'opération de paiement au niveau du client de paiement.

2. Procédé selon la revendication 1, dans lequel les informations d'authentification biométrique prédéfinies sont stockées localement au niveau du dispositif terminal.

3. Procédé selon la revendication 1, dans lequel les informations d'authentification biométrique comprennent une ou plusieurs des informations suivantes : informations d'empreintes digitales, informations d'image faciale et informations vocales.

4. Procédé selon la revendication 1, dans lequel la génération de la clé privée de certificat de signature numérique et de la clé publique de certificat de signature numérique correspondant aux deuxièmes informations d'authentification biométrique comprend la génération de la clé privée de certificat de signature numérique et de la clé publique de certificat de signature numérique correspondant aux deuxièmes informations d'authentification biométrique selon un ID de l'utilisateur, un ID du dispositif terminal et des informations de résultat de la comparaison montrant la cohérence.

5. Procédé selon la revendication 1, dans lequel la réception, par le dispositif terminal, de la demande d'enregistrement et la collecte de deuxièmes informations d'authentification biométrique de l'utilisateur conformément à la demande d'enregistrement comprennent :
l'envoi, par le client de sécurité au niveau du dispositif terminal, de la demande d'enregistrement au serveur de sécurité ;
la réception d'un message de réponse, au niveau du serveur de paiement, renvoyé par le serveur de sécurité conformément à la demande d'enregistrement ; et
la vérification et la signature du message de réponse au niveau du client de paiement en appelant le client de sécurité et la collecte des deuxièmes informations d'authentification biométrique de l'utilisateur après la réussite de la vérification et de la signature.

6. Procédé selon la revendication 1, dans lequel l'envoi du message de demande d'enregistrement au serveur de paiement comprend :
la vérification, par le dispositif terminal, que l'utilisateur est ou non un utilisateur valide ; et
la vérification d'un mot de passe de paiement d'origine lorsque l'utilisateur est un utilisateur valide et l'envoi du message de demande d'enregistrement au serveur de paiement lorsque la vérification réussit.

7. Procédé selon la revendication 6, dans lequel la vérification que l'utilisateur est ou non un utilisateur valide comprend :
l'obtention d'un numéro de téléphone mobile lié à l'utilisateur ;
l'envoi d'un message court à un téléphone mobile associé au numéro de téléphone mobile ; et
la réception d'un message indiquant un accusé de réception du message court.

8. Procédé selon l'une quelconque des revendications 1 et 5 à 7, le procédé étant appliqué à une authentification d'identité pendant le paiement, et la demande de paiement étant une demande de paiement.

9. Procédé selon n'importe quelle revendication précédente, comprenant en outre :
le cryptage de la demande de paiement ;
le décryptage de la demande de paiement cryptée selon un algorithme prédéfini après vérification et signature du message de vérification d'informations biométriques conformément à la clé publique de certificat de signature numérique ; et
le renvoi d'informations de résultat indiquant que l'authentification réussit ou non uniquement après que le décryptage réussit.

10. Appareil d'authentification d'identité, l'appareil comprenant des modules logiciels exécutables par processeur stockés dans une mémoire de l'appareil, qui, à leur exécution, entraînent la réalisation du procédé selon l'une quelconque des revendications 1 à 9.
